# EUROPÄISCHE PATENTSCHRIFT

(11) **EP 3 442 372 B1**
(45) Veröffentlichungstag und Bekanntmachung des Hinweises auf die Patenterteilung: **04.05.2022**
(21) Anmeldenummer: 17715936.5
(22) Anmeldetag: 06.04.2017
(51) Int. Cl.: A43C 7/00, A43C 7/08, F16G 11/10, A43B 5/04

(54) **SCHNÜRSENKELSICHERUNG FÜR INNENSCHUH**
SHOELACE FASTENING FOR INNER SHOE
ÉLÉMENT DE SÛRETÉ DE LACET POUR CHAUSSURE INTÉRIEURE

(30) Priorität: 14.04.2016 DE 102016106958
(43) Veröffentlichungstag der Anmeldung: 20.02.2019
(73) Patentinhaber: Nitro Snowboards, 82487 Oberammergau (DE)
(72) Erfinder: DELAGO, Thomas, 82487 Oberammergau (DE)
(74) Vertreter: von Bülow & Tamada
(86) Internationale Anmeldenummer: PCT/EP2017/058304
(87) Internationale Veröffentlichungsnummer: WO 2017/178337

(56) Entgegenhaltungen:
- EP-A1- 1 520 490
- EP-A1- 1 813 163
- EP-A1- 2 620 071
- WO-A1-2006/074067
- DE-A1- 10 238 025
- DE-A1-102007 002 367
- JP-A- 2006 075 179
- JP-A- 2007 215 845
- US-A- 3 574 900

## Beschreibung

Die vorliegende Erfindung betrifft ein Sicherungselement gemäß dem Oberbegriff des Anspruchs 1 und einen Winterstiefel mit dem Sicherungselement.

EP 2 620 071 A1 offenbart ein Sicherungselement für Stiefel.

Ein Sicherungselement für einen Schuh eines Stiefels mit einem scheibenförmigen ein- oder mehrteiligen Grundkörper, umfassend eine Grundseite zur Befestigung am Schuh, eine der Grundseite gegenüberliegende Deckseite und zwei in den Mantel zwischen der Grundseite und der Deckseite eingeformte Kerben zur jeweiligen Aufnahme und Führung eines Endes eines Schnürsenkels, wobei die Enden des Schürsenkels in den Kerben geführt in einer Zugrichtung zum Verschnüren des Stiefels ziehbar sind, ist aus der EP 0 848 917 B2 bekannt. Laut Anspruch 1 dieser Druckschrift besitzen die Kerben in diesem Sicherungselement einen Gleitabschnitt, an den sich winklig dazu verlaufend ein Festklemmabschnitt anschließt. In diesem Sicherungselement sind die Kerben eingerichtet, den Schnürsenkel entgegen einer Führungsrichtung voneinander weg laufend zu halten.

Ein Schnürsenkel wird zunächst im Gleitabschnitt geführt mit beiden Händen nach oben gezogen, um den Schuh festzuschnüren. Anschließend werden die Enden des Schnürsenkels im Festklemmabschnitt durch Umlegen gesichert, wozu beide Hände notwendig sind. Insbesondere für einen Einsatz im Innenschuh ist dies jedoch ungeeignet, da vor allem beim schnellen Nachsichern beispielsweise auf einem Snowboard nicht genügend Platz innerhalb des Außenschuhs vorhanden ist, um den Schnürsenkel mit beiden Händen auseinander zu ziehen.

Deshalb ist es Aufgabe der Erfindung, ein Sicherungselement anzugeben, das es erlaubt, den Schnürsenkel nur mit einer Hand festzuziehen.

Diese Aufgabe wird durch ein Sicherungselement nach Anspruch 1 gelöst. Bevorzugte Weiterbildungen der Erfindung sind Gegenstand der abhängigen Ansprüche.

Der Erfindung liegt die Überlegung zugrunde, dass wenn der Festklemmabschnitt in den Gleitabschnitt gelegt wird, dann kann der Schnürsenkel allein durch Ziehen der beiden in den Kerben angeordneten Schnürsenkelenden mit einer Hand gesichert werden. Ein extra Umlegen der Schnürsenkelenden ist nicht notwendig. Daher kann ein Schnürsenkel auch am Innenschuh in einfacher Weise mit einer Hand jederzeit nachgezogen werden, selbst wenn der Träger des Schuhs oder Stiefels auf einem Snowboard, einem Rollschuh oder dergleichen steht.

Das angegebene Sicherungselement lässt sich sowohl an einem Außenschuh, als auch an einem Innenschuh verwenden, wobei im Innenschuh die Verwendung aufgrund des dort vorherrschenden Platzmangels besonders wirkungsvoll ist.

Mit dem Sicherungselement gemäß Anspruch 1 kann in einfacher Weise die Reibung auf den Schnürsenkel erhöht und dieser so gehalten werden.

Mit dem Sicherungselement gemäß Anspruch 1 wird der Schnürsenkel beim Halten ins

Innere der Kerben gezogen. Auf diese Weise kann ein versehentliches Lösen und Herausrutschen des Schnürsenkels aus den Kerben vermieden werden.

Mit dem Sicherungselement gemäß Anspruch 1 verkeilen sich die Zähne im Schnürsenkel, wenn dieser sich entgegen der Führungsrichtung bewegt. Auf diese Weise wird die Haltewirkung des angegebenen Sicherungselements weiter gesteigert.

Mit den unterschiedlichen Größen gemäß Anspruch 1 können die einzelnen Zähne an verschiedene mechanische Anforderungen in den Kerben angepasst werden.

Das Sicherungselement gemäß Anspruch 1 erlaubt es, den Schnürsenkel gegen ein unbeabsichtiges Herausrutschen aus den Kerben zu sichern.

Durch die Anordnung der größeren Zähne am Anfang kann beim Eindrücken des Schnürsenkels in die Kerbe die größte Hebelkraft aufgebracht werden.

Das Sicherungselement gemäß Anspruch 2 lässt sich über den Flansch besonders einfach an einem Innenschuh befestigen.

Das zuvor beschriebene Sicherungselement kann in einem Innenschuh eines Winterstiefel gemäß Anspruch 3 verbaut sein.

Die oben beschriebenen Eigenschaften, Merkmale und Vorteile dieser Erfindung sowie die Art und Weise, wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine perspektische Ansicht eines Außenschuhs eines Winterstiefels,
Fig. 2 eine perspektische Ansicht eines Innenschuhs eines Winterstiefels mit einem Sicherungselement,
Fig. 3 das Sicherungselement der Fig. 2 in einer ersten perspektivischen Ansicht,
Fig. 4 das Sicherungselement der Fig. 2 in einer zweiten perspektivischen Ansicht, und
Fig. 5 das Sicherungselement der Fig. 2 in einer Ansicht von unten,
Fig. 6 ein alternatives Sicherungselement in einer perspektivischen Ansicht, und
Fig. 7 das Sicherungselement der Fig. 6 in einer Ansicht von unten.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

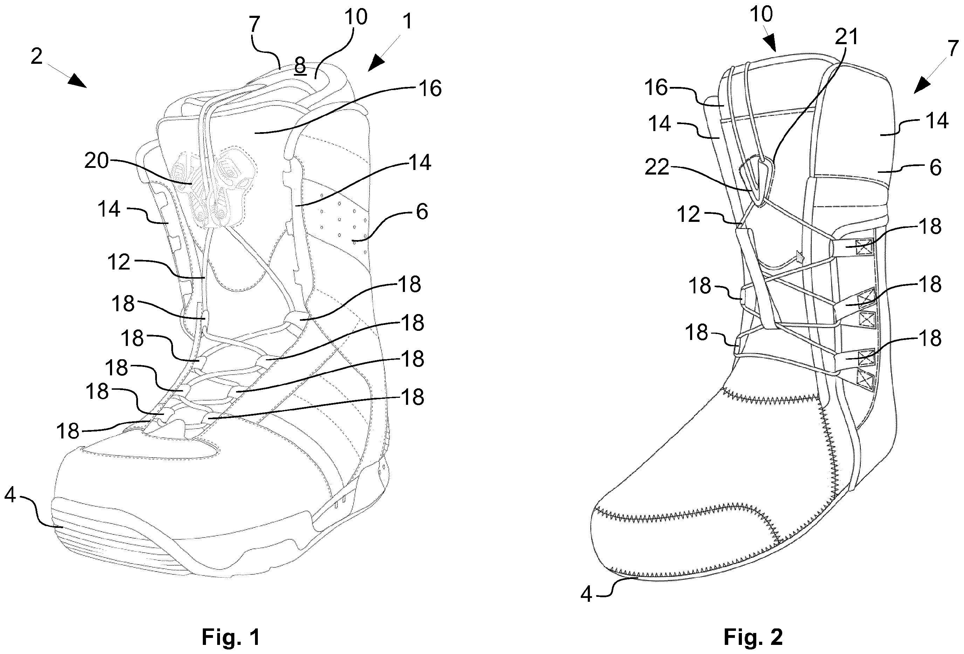

Es wird auf Fig. 1 Bezug genommen, die in einer perspektivischen Ansicht einen Außenschuh 1 eines Winterstiefels 2 zeigt.

Der Außenschuh 1 umfasst eine Stiefelsohle 4 und einen darauf getragenen Schaft 6, die einen noch zu beschreibenden Innenschuh 7 einhausen. Dieser Innenschuh 7 weist einen Fußaufnahmeraum 8 auf, in den ein nicht weiter gezeigter Fuß über eine Einstiegsöffnung 10 eingeführt werden.

Der in den Fußaufnahmeraum 8 eingeführte Fuß kann nun am Außenschuh 1 über eine oder mehrere nicht weiter referenzierte Schnürzonen im Fußaufnahmeraum 8 fixiert werden. Der in Fig. 1 gezeigte Außenschuh 1 weist zwei Schnürzonen auf, von denen nur eine Schnürzone mit einem Schnürsenkel 12 durchzogen ist.

Über die Schnürzonen sind am Schaft 6 zwei Seitenteile 14 miteinander verschnürbar, die eine Zunge 16 überdecken. Zum Führen des Schnürsenkels 12 sind an den Seitenteilen 14 noch im Detail zu beschreibende Schlaufen 18 befestigt. In der vorliegenden Ausführung ist der Schnürsenkel 12 durch die Schlaufen 18 überkreuz geführt.

Der festgezogene Schnürsenkel 12 kann nach dem Festschnüren an einem Klemmelement 20 verklemmt werden. Da es auf dieses Klemmelement 20 nicht weiter ankommt, soll auf Details hierzu verzichtet werden.

Es wird auf Fig. 2 Bezug genommen, in der der Innenschuh 7 perspektivisch dargestellt ist.

Der Innenschuh weist im Wesentlichen die selben technischen Elemente, wie der Außenschuh 1 auf. Er weist jedoch nur eine Schnürzone und damit auch nur einen Schnürsenkel 12 auf. Sohle 4 und Schaft 6 des Innenschuhs 7 hausen den Fußaufnahmeraum 8 unmittelbar ein. Auf eine detaillierte Darstellung der einzelnen technischen Elemente des Innenschuhs 7 wird der kürze halber verzichtet.

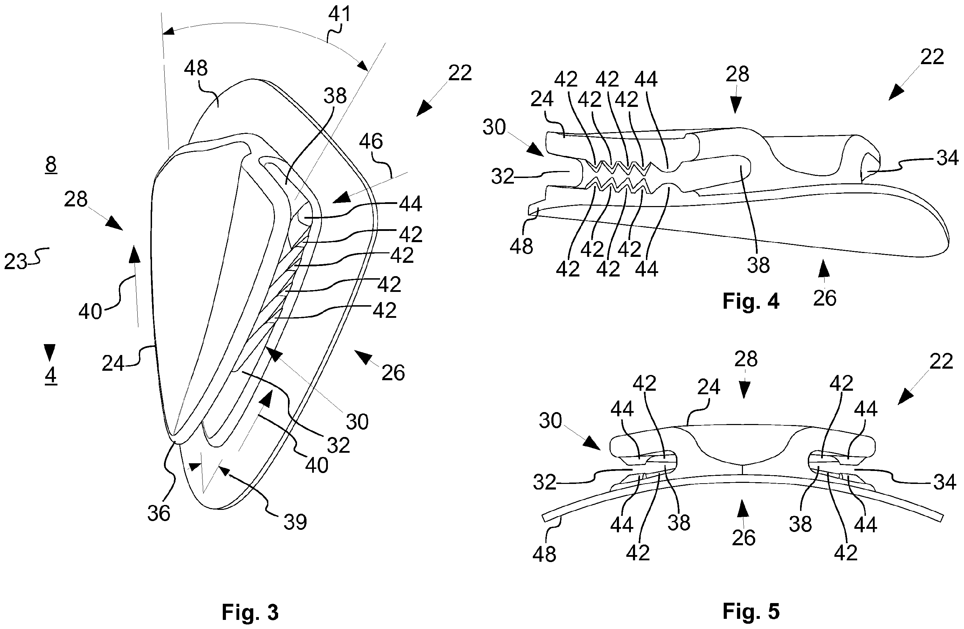

Anders als der Außenschuh 1 besitzt der Innenschuh 7 statt eines Klemmelementes 20 ein Sicherungselement 22, das nachstehend anhand der Fig. 3 bis 5 im einzelnen beschrieben werden soll. Das Sicherungselement 22 kann am Innenschuh 7 mit einem beliebigen Befestigungselement, wie hier einer Nähnaht 21, befestigt sein. In Fig. 3 ist das Sicherungselement in einer Einbaurichtung 23 am Winterstiefel 2 gezeigt, die sich von der Einstiegsöffnung 8 hin zur Stiefelsohle 4 erstreckt.

Das Sicherungselement 22 besitzt einen scheibenförmigen Grundkörper 24 mit einer Grundseite 26, einer der Grundseite 26 gegenüberliegenden Deckseite 28 und einer zwischen der Grundseite 26 und der Deckseite 28 verlaufenden Mantelseite 30. Die einzelnen Seiten 26 bis 30 müssen dabei nicht eben sein und können, wie in den Figuren zu sehen, auch stellenweise stark verjüngt sein, wie beispielsweise die Mantelseite 30 in einem zur Einstiegsöffnung 8 hin gerichteten Bereich.

Die Mantelseite 30 weist ein erstes Mantelseitenteil 32 und ein zweites Mantelseitenteil 34 auf, die zur Stiefelsohle 4 hin gerichtet aufeinander zu laufen und sich in einer Spitze 36 treffen. Dieses Treffen in der Spitze 36 ist jedoch nicht zwangsläufig notwendig. Ferner erstrecken sich die beiden Mantelseitenteile 32, 34 nicht über die gesamte Mantelseite 30, so dass in der vorliegenden Ausführung noch wenigstens ein weiteres Mantelseitenteil vorhanden ist, das nicht extra mit einem Bezugszeichen versehen ist.

Am ersten und zweiten Mantelseitenteil 32, 34 erstreckt sich jeweils in den Grundkörper 24 hinein eine Kerbe 38 zur Aufnahme des Schnürsenkels 12 des Innenschuhs 7. Diese Kerben 38 sind eingerichtet, den in den Fig. 3 bis 5 nicht gezeigten Schnürsenkel 12 entgegen einer Führungsrichtung 40 zu halten und so eine Bewegung des Schnürsenkels entgegen dieser Führungsrichtung 40 zu verhindern. Dabei treten die Enden des Schnürsenkel 12 an der Spitze 36 des Sicherungselementes 22 mit einem Eintrittswinkel 39 in die Kerben 38 ein und, der Spitze 36 gegenüberliegend, aus den Kerben 38 mit einem Austrittswinkel 41 wieder aus. Der Eintrittswinkel 39 ist dabei gleich oder größer dem Austrittswinkel 41, so dass die beiden Enden des Schnürsenkels 12 zusammengeführt werden, um sie entgegen der EP 0 848 917 B2 beim Schnüren mit einer Hand halten zu können.

Hierzu sind in den einzelnen Kerben 38 Zähne 42, 44 ausgebildet, die in einen der Übersichtlichkeit halber nicht weiter referenzierten Innenraum der Kerben 38 hinein ragen. Die Zähne 42, 44 sind parallel zueinander ausgerichtet und verlaufen in den jeweilgen Kerben 38 in einer Zahnrichtung 46 winklig, insbesondere stumpfwinklig zur Führungsrichtung 40. Dabei gibt es zwei verschiedene Arten von Zähnen 42, 44. Die ersten Zähne 42 sind kleiner als die zweiten Zähne 44 und in der Führungsrichtung 40 gesehen nach den zweiten Zähnen 44 angeordnet. Ferner erstrecken sich die zweiten Zähne 44 in der Zahnrichtung 46 nicht über die gesamte Kerbe 38, sondern nur an deren in Zahnrichtung 46 gesehenen Außenseite.

Wie in Fig. 2 zu sehen, wird der Schnürsenkel 12 überkreuz in die Kerben 38 der Mantelseitenteile 32, 34 eingesetzt. Auf diese Weise stellt die Spitze 36 einen Hebelpunkt dar und die Enden des Schnürsenkels 12 können durch die Enge zwischen den beiden größeren zweiten Zähnen 44 durch Ziehen an diesen gedrückt werden. Danach kann der Schnürsenkel 12 durch ziehen in der Führungsrichtung 40 festgezogen werden. Um dieses Ziehen zu ermöglichen, sind die ersten Zähne 42 spitz und in der Führungsrichtung 40 ausgerichtet.

Damit während des Ziehens die Schnürsenkel 12 aufgrund der in der Führungsrichtung 40 verlaufenden ersten Zähne 42 nicht wieder aus den Kerben 38 herausrutschen, dienen die größeren zweiten Zähne 44 als Begrenzung. Sobald die Schnürsenkel 12 festgezogen sind und beispielsweise aufgrund einer Bewegung des Trägers des Winterstiefels 2 auf Zug in der Führungsrichtung 40 belastet werden, werden die Schnürsenkel 12 aufgrund des Verlaufs der ersten Zähne 42 in der Führungsrichtung 46 ins Innere der Kerben 38 gezogen. Aus diesem Grund sind die größeren zweiten Zähne 44 auch im Inneren der Kerben unterbrochen. Die Festigkeit der Schnürung der Schnürsenkel 12 am Sicherungselement 22 kann durch Ziehen der Schnürsenkel 12 in der Führungsrichtung 40 jederzeit nachgestellt werden. Dies ist jederzeit mit nur einer einzigen Hand möglich.

Um das Sicherungselement 22 in einfacher Weise am Innenschuh 7 zu befestigen, ist ein Flanschelement 48 an diesem ausgebildet. Über dieses Flanschelement 48 kann das Sicherungselement 22 am Innenschuh 7 vernäht, verklebt, vernietet, verschraubt oder in jeder beliebigen anderen Weise befestigt werden.

Am Außenschuh 1 kann statt des Klemmelements 20 auch das Sicherungselement 22 zur Befestigung der Schnürsenkel 12 verwendet werden.

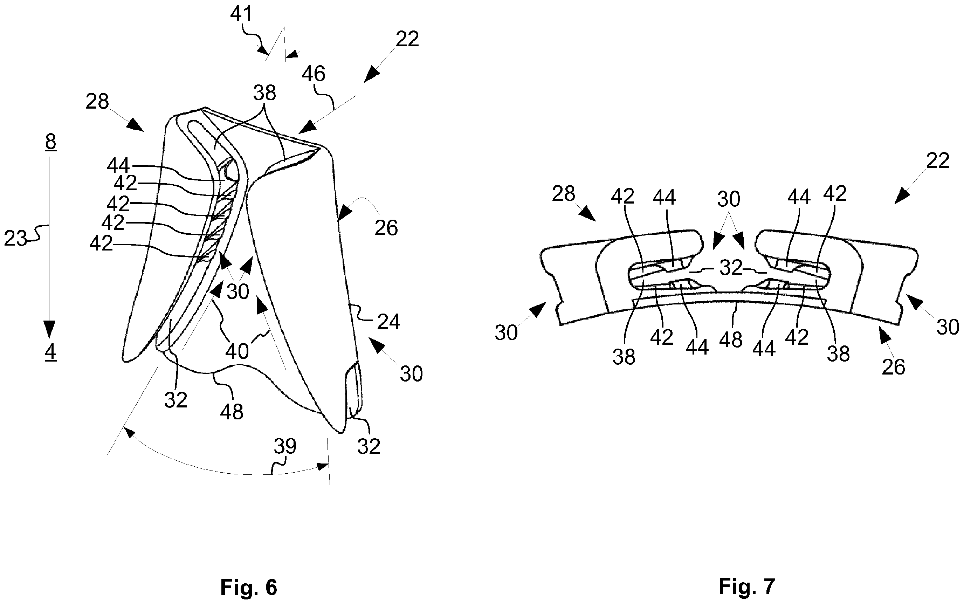

In den Fig. 6 und 7 ist eine alternative Ausführung des Sicherungselementes 22 gezeigt, in dem der Grundkörper 24 mehrteilig ist. Hier werden die Enden des Schnürsenkels 12 jedoch nicht überkreuz geführt, sondern sie laufen voneinander beabstandet in die jeweiligen Kerben 38 ein.

## Patentansprüche

1. Sicherungselement (22) für einen Schuh (1, 7) eines Stiefels (2) mit einem scheibenförmigen ein- oder mehrteiligen Grundkörper (24), umfassend
- eine Grundseite (26) zur Befestigung am Schuh (1, 7),
- eine der Grundseite (26) gegenüberliegende Deckseite (28) und
- zwei in den Mantel zwischen der Grundseite (26) und der Deckseite (28) eingeformte Kerben (38) zur jeweiligen Aufnahme und Führung eines Endes eines Schnürsenkels (12), wobei die Enden des Schürsenkels (12) in den Kerben (38) geführt in einer Zugrichtung (40) zum Verschnüren des Stiefels (2) ziehbar sind, wobei die Kerben (38) in der Zugrichtung (40) gesehen je einen Abschnitt aufweisen, die in der Zugrichtung (40) gesehen, sich aneinander derart annähernd verlaufen, dass die Enden des Schnürsenkels(12) mit einem Eintrittswinkel (39) in die Kerben (38) eintreten, der gleich oder größer ist, als ein Austrittswinkel (41), mit dem die Enden des Schnürsenkels (12) aus den beiden Kerbenabschnitten wieder austreten, und wobei die Kerben (38) eingerichtet sind, die Enden des Schnürsenkels (12) in diesen Abschnitten reibschlüssig entgegen der entsprechenden Führungsrichtung (40) zu halten, wobei die Kerben (38) in den Abschnitten Zähne (42, 44) umfassen, die in einen Innenraum der entsprechenden Kerbe (38) hinein ragen, und wobei wenigstens ein Teil der Zähne (42, 44) in der entsprechenden Führungsrichtung (40) geneigt ist, wobei die Zähne (42, 44) parallel zueinander und winklig (46) zur Zugrichtung (40) verlaufend angeordnet sind, wobei wenigstens einer der Zähne (44) größer ausgebildet ist, als der Rest der Zähne (42), wobei sich der größere Zahn (44) über einen Teil des Innenraums der entsprechenden Kerbe (38) an der Außenseite erstreckt, wobei der größere Zahn (44) in einer der Kerben (38) in der entsprechenden Führungsrichtung (40) gesehen nach den kleineren Zähnen (42) angeordnet ist, und im Inneren der Kerbe unterbrochen ist.

2. Sicherungselement (22) nach dem vorhergehenden Anspruch, wobei der Grundkörper (24) ein Flanschelement (48) zur Befestigung am Schuh (1, 7) umfasst.

3. Stiefel (2) umfassend einen Außenschuh (1), einen im Außenschuh (1) aufgenommenen Innenschuh (7), einen Schnürsenkel (12) zum Verschnüren des Innenschuhs (7) in einer Zugrichtung und ein am Innenschuh (7) befestigtes Sicherungselement (22) nach einem der vorstehenden Ansprüche, wobei das Sicherungselement (22) am Innenschuh (7) derart angeordnet ist (23), dass die Führungsrichtungen (40) zumindest spitzwinklig zur Zugrichtung verlaufen.

## Claims

1. Securing element (22) for a shoe (1, 7) of a boot (2) with a disc-shaped one-piece or multi-piece base body (24), comprising
- a base side (26) for fastening to the boot (1, 7),
- a cover side (28) opposite the base side (26), and
- two notches (38) formed in the shell between the base side (26) and the cover side (28) for respectively receiving and guiding one end of a shoelace (12), wherein the ends of the shoelace (12), guided in the notches (38), can be pulled in a pulling direction (40) for lacing the boot (2), wherein the notches (38), as seen in the pulling direction (40), each have a portion which, as seen in the pulling direction (40), run close to one another in such a way that the ends of the lace (12) enter the notches (38) at an entry angle (39) which is equal to or greater than an exit angle (41) at which the ends of the lace (12) emerge from the two notch sections again, and the notches (38) being set up frictionally holding the ends of the lace (12) in these sections against the corresponding guiding direction (40), wherein the notches (38) in the sections comprise teeth (42, 44) projecting into an inner space of the corresponding notch (38), and wherein at least a part of the teeth (42, 44) is inclined in the corresponding guiding direction (40), wherein the teeth (42, 44) are arranged parallel to each other and angularly (46) to the pulling direction (40) at least one of the teeth (44) being formed larger than the rest of the teeth (42), the larger tooth (44) extending over a part of the inner space of the corresponding notch (38) on the outside, the larger tooth (44) being arranged in one of the notches (38) after the smaller teeth (42) as seen in the corresponding guiding direction (40), and being interrupted in the interior of the notch.

2. Securing element (22) according to the preceding claim, wherein the base body (24) comprises a flange element (48) for attachment to the boot (1, 7).

3. Boot (2) comprising an outer shoe (1), an inner shoe (7) accommodated in the outer shoe (1), a lace (12) for lacing the inner shoe (7) in a pulling direction, and a securing element (22) according to one of the preceding claims fastened to the inner shoe (7), wherein the securing element (22) is arranged (23) on the inner shoe (7) in such a way that the guiding directions (40) run at least at an acute angle to the pulling direction.

## Revendications

1. Élément de sécurité (22) pour une chaussure (1, 7) d'une botte (2) avec un corps de base (24) en forme de disque en une ou plusieurs parties, comprenant
- un côté de base (26) pour la fixation à la chaussure (1, 7),
- une face de couverture (28) opposée à la face de base (26) et
- deux encoches (38) formées dans l'enveloppe entre le côté de base (26) et le côté de recouvrement (28) pour recevoir et guider respectivement une extrémité d'un lacet (12), les extrémités du lacet (12) guidées dans les encoches (38) pouvant être tirées dans une direction de traction (40) pour lacer la botte (2), les encoches (38), vues dans la direction de traction (40), présentant chacune un tronçon, qui, vues dans la direction de traction (40), se rapprochent l'une de l'autre de telle sorte que les extrémités du lacet (12) entrent dans les encoches (38) avec un angle d'entrée (39) qui est égal ou supérieur à un angle de sortie (41) avec lequel les extrémités du lacet (12) sortent à nouveau des deux sections d'encoches, et les encoches (38) étant aménagées, maintenir les extrémités du lacet (12) dans ces sections par friction à l'encontre de la direction de guidage (40) correspondante, les encoches (38) comprenant dans les sections des dents (42, 44) qui font saillie dans un espace intérieur de l'encoche (38) correspondante, et au moins une partie des dents (42, 44) étant inclinée dans la direction de guidage (40) correspondante, les dents (42, 44) étant disposées parallèlement les unes aux autres et formant un angle (46) avec la direction de traction (40), au moins l'une des dents (44) étant plus grande que le reste des dents (42), la plus grande dent (44) s'étendant sur une partie de l'intérieur de l'encoche correspondante (38) sur le côté extérieur, la plus grande dent (44) étant disposée dans l'une des encoches (38) après les plus petites dents (42), vu dans la direction de guidage correspondante (40), et étant interrompue à l'intérieur de l'encoche.

2. Élément de sécurité (22) selon la revendication précédente, dans lequel le corps de base (24) comprend un élément de bride (48) pour la fixation à la chaussure (1, 7).

3. Botte (2) comprenant un chausson extérieur (1), un chausson intérieur (7) logé dans le chausson extérieur (1), un lacet (12) pour lacer le chausson intérieur (7) dans une direction de traction et un élément de sécurité (22) fixé au chausson intérieur (7) selon l'une des revendications précédentes, l'élément de sécurité (22) étant disposé (23) sur le chausson intérieur (7) de telle manière que les directions de guidage (40) s'étendent au moins à angle aigu par rapport à la direction de traction.
